# EUROPÄISCHE PATENTSCHRIFT

(11) **EP 2 705 202 B1**
(45) Veröffentlichungstag und Bekanntmachung des Hinweises auf die Patenterteilung: **16.08.2017**
(21) Anmeldenummer: 12717051.2
(22) Anmeldetag: 16.04.2012
(51) Int. Cl.: E05B 17/00, B60N 2/36, B60N 2/015, B60N 2/44

(54) **VERRIEGELUNGSVORRICHTUNG UND FAHRZEUGSITZ**
LOCKING DEVICE AND VEHICLE SEAT
DISPOSITIF DE VERROUILLAGE ET SIÈGE DE VÉHICULE

(30) Priorität: 06.05.2011 DE 102011101285
(43) Veröffentlichungstag der Anmeldung: 12.03.2014
(73) Patentinhaber: Adient Luxembourg Holding S.à r.l., 2453 Luxembourg (LU)
(72) Erfinder: MÜLLER, Peter, 67686 Mackenbach (DE); WINDECKER, Volker, 67729 Sippersfeld (DE); HABER, Stefan, 66955 Pirmasens (DE); YASAROGLU, Kadir, 67655 Kaiserslautern (DE); LABUK, Silke, 67685 Weilerbach (DE)
(74) Vertreter: Liedhegener, Ralf
(86) Internationale Anmeldenummer: PCT/EP2012/001625
(87) Internationale Veröffentlichungsnummer: WO 2012/152361

(56) Entgegenhaltungen:
- EP-A1- 2 141 312
- DE-A1-102004 021 516
- DE-A1-102007 016 409
- DE-B3- 10 332 912
- US-A1- 2004 007 882

## Beschreibung

Die Erfindung betrifft eine Verriegelungsvorrichtung für einen Fahrzeugsitz mit den Merkmalen des Oberbegriffs des Anspruchs 1. Die Erfindung betrifft auch einen Fahrzeugsitz mit den Merkmalen des Anspruchs 11.

### Stand der Technik

Eine Möglichkeit zur Anwendung solcher Verriegelungsvorrichtungen besteht darin, dass sie zur Bodenanbindung eines Fahrzeugsitzes in einem Kraftfahrzeug dienen.

Der Spannexzenter übt im verriegelten Zustand über die Spannfläche ein schließendes Moment auf die Klinke aus.

Aus der DE 10 2007 016 409 A1 ist eine derartige Verriegelungsvorrichtung für einen Fahrzeugsitz, welche eine Klinke und einen Spannexzenter umfasst, bekannt.

Die US 2004 / 0 007 882 A1 offenbart eine Verriegelungsvorrichtung für einen Fahrzeugsitz mit einer vorgespannten Druckfeder, die mit ihrem einen Ende an einem Arm des Spannexzenters angreift und diesen in seiner Verriegelungslage federbelastend abstützt.

Die DE 103 32 912 B3 zeigt eine Verriegelungsvorrichtung bekannt, welche ein separates Entriegelungselement aufweist, welches zum Entriegeln der Verriegelungsvorrichtung auf den Spannexzenter einwirkt.

### Aufgabe

Aufgabe der Erfindung ist es eine Verriegelungsvorrichtung der eingangs genannten Art zu schaffen, die einen geringen Bauraum erfordert und ein geringes Gewicht aufweist.

### Lösung

Diese Aufgabe wird erfindungsgemäß dadurch gelöst, dass ein Entriegelungselement durch eine Betätigungseinrichtung entgegen einer Federkraft aus einer Verriegelungsstellung in eine Entriegelungsstellung um die zweite Achse schwenkbar gelagert ist, durch das direkt oder indirekt der Spannexzenter aus seiner Verriegelungslage in Richtung in seine Entriegelungslage schwenkbar mitnehmbar ist, wobei zwischen dem Entriegelungselement und dem Spannexzenter ein vorgespanntes Federelement angeordnet ist, durch welches das Entriegelungselement in seine Verriegelungsstellung und der Spannexzenter in seine Verriegelungslage federbelastet ist.

Durch diese Ausbildung muss zum Entriegeln der Verriegelungsvorrichtung nur eine Federelement betätigt werden, so dass auch nur ein niedrigeres Betätigungsmoment erforderlich ist.

Bei zu herkömmlichen Verriegelungsvorrichtungen gleichem Betätigungsmoment kann dieses Federelement stärker ausgeführt sein, so dass auch höhere Rückstellkräfte möglich sind, um beispielsweise die Betätigungseinrichtung, die einen Bowdenzug aufweisen kann, sicher zurück zu drücken.

Insbesondere die Verringerung der Bauteile führt zu einer geringeren Baugröße und damit zu einem geringeren erforderlichen Bauraum und einem geringerem Gewicht.

Das vorgespannte Federelement kann eine Zugfeder sein, die mit ihrem einen Ende in einem radialen Abstand zur zweiten Achse an dem Entriegelungselement und mit ihrem anderen Ende in einem radialen Abstand zur ersten Achse an dem Spannexzenter angreift.

Es ist aber auch möglich, dass das vorgespannte Federelement eine Druckfeder ist, die mit ihrem einen Ende in einem radialen Abstand zur zweiten Achse an dem Entriegelungselement und mit ihrem anderen Ende in einem radialen Abstand zur ersten Achse an dem Spannexzenter abgestützt ist.

Die Klinke kann aufgrund einer entsprechenden Einbaulage nach einer Bewegung des Spannexzenters in seine Entriegelungslage durch Schwerkraft in ihre entriegelte Lage bewegbar sein.

Um diese Bewegung auch bei dafür ungünstiger Einbaulage der Klinke sicherstellen zu können, kann eine vorgespannte Klinkendruckfeder mit ihrem einen Ende an einem Arm des Spannexzenters diesen in seine Verriegelungslage belastend abgestützt ist und mit ihrem anderen Ende die Klinke in Entriegelungsrichtung beaufschlagen.

Alternativ dazu kann aber auch eine vorgespannte Feder zwischen der Klinke und einem feststehenden Bauteil wie z.B. einem Gehäuse angeordnet sein.

Ist ein Fangexzenter um die erste Achse schwenkbar gelagert und sichert durch Zusammenwirken mit der ersten Funktionsfläche der Klinke einen verriegelten Zustand der Klinke, wobei die Klinke im verriegelten Zustand durch eine Fangfläche des Fangexzenters abstützbar ist und wobei durch das um die zweite Achse schwenkbare Entriegelungselement der Fangexzenter zwischen seiner Verriegelungsposition und seiner Entriegelungsposition bewegbar ist, so stützt bei verriegelter Verriegelungsvorrichtung in einem Crashfall der Fangexzenter mit der Fangfläche die Klinke an deren erster Funktionsfläche ab.

Ein Entriegelungsnehmer kann aus einer Verriegelungsstellung in eine Entriegelungsstellung um die erste Achse schwenkbar gelagert sein und über eine Mitnahmekopplung derart mit dem Entriegelungselement gekoppelt sein, dass durch eine Schwenkbewegung des Entriegelungselements aus der Verriegelungsstellung in die Entriegelungsstellung, beziehungsweise durch eine Schwenkbewegung des Entriegelungselements aus der Entriegelungsstellung in die Verriegelungsstellung, der Entriegelungsgeber von seiner Verriegelungsstellung in seine Entriegelungsstellung, beziehungsweise von seiner Entriegelungsstellung in seine Verriegelungsstellung, bewegbar antreibbar ist.

Dabei kann das Entriegelungselement als Signalgeber zum Anzeigen des Verriegelungszustands der Verriegelungsvorrichtung dienen.

Es ist aber auch möglich, dass das Entriegelungselement von einer weiteren Betätigungseinrichtung aus seiner Verriegelungsstellung in seine Entriegelungsstellung schwenkbar ist und durch die Mitnahmekopplung bei einer Schwenkbewegung des Entriegelungselements aus der Verriegelungsstellung in die Entriegelungsstellung oder bei einer Schwenkbewegung des Entriegelungselements aus der Entriegelungsstellung in die Verriegelungsstellung der Entriegelungsnehmer von seiner Verriegelungsstellung in seine Entriegelungsstellung oder von seiner Entriegelungsstellung in seine Verriegelungsstellung bewegbar antreibbar ist.

Damit sind zwei separate Angriffsstellen für Betätigungseinrichtungen vorhanden, nämlich der Entriegelungsnehmer und das Entriegelungselement, was eine variable Betätigungsanbindung ermöglicht.

Damit ist es auch möglich die Betätigungseinrichtungen an unterschiedlichen Stellen im Fahrzeug anzuordnen und von jeder Betätigungseinrichtung aus die Verriegelungsvorrichtung zu betätigen. Eine Betätigungseinrichtung kann dabei im Fahrgastraum und die andere Betätigungseinrichtung im Kofferraum angeordnet sein.

An dem Entriegelungselement und/oder dem Entriegelungsnehmer kann jeweils ein Bowdenzug, ein elektrischer Antrieb oder ein anders gearteter Antrieb zur unmittelbaren Betätigung oder zur Fernbetätigung angreifen.

Ist der Spannexzenter zwischen dem Fangexzenter und dem Entriegelungsnehmer schwenkbar auf der ersten Achse gelagert und weist der Entriegelungsnehmer einen parallel zur ersten Achse sich erstreckenden Mitnehmer auf, der in eine Mitnahmeausnehmung des Fangexzenters eingreift und durch den der Spannexzenter in Richtung seiner Entriegelungslage schwenkbar mitnehmbar ist, so wird bei kompaktem Aufbau der Fangexzenter in beide Schwenkrichtungen durch den Entriegelungsnehmer mitgenommen, während der Spannexzenter nur in Richtung seiner Entriegelungslage von dem Entriegelungsnehmer mitgenommen wird.

In einfachem und radiale Toleranzen des Mitnehmers kompensierendem Aufbau kann dabei die Mitnahmeausnehmung eine Mitnahmegabel sein.

Es versteht sich, dass auch andere geeignete Kopplungsvarianten anwendbar sind.

Die Aufgabe wird auch durch einen Fahrzeugsitz mit den Merkmalen des Anspruchs 11 gelöst.

### Figuren und Ausführungsformen der Erfindung

Im Folgenden ist die Erfindung anhand von in den Zeichnungen dargestellten vorteilhaften Ausführungsbeispielen näher erläutert. Die Erfindung ist jedoch nicht auf diese Ausführungsbeispiele beschränkt. Es zeigen:
- Figur 1: eine Explosionsdarstellung eines ersten Ausführungsbeispiels einer Verriegelungsvorrichtung,
- Figur 2: eine frontseitige Innenansicht der Verriegelungsvorrichtung nach Figur 1 in Verriegelungsstellung,
- Figur 3: eine Explosionsdarstellung eines zweiten Ausführungsbeispiels einer Verriegelungsvorrichtung,
- Figur 4: eine frontseitige Innenansicht der Verriegelungsvorrichtung nach Figur 3 in Verriegelungsstellung,
- Figur 5: eine Explosionsdarstellung eines dritten Ausführungsbeispiels einer Verriegelungsvorrichtung und
- Figur 6: eine frontseitige Innenansicht der Verriegelungsvorrichtung nach Figur 5 in Verriegelungsstellung.

Die dargestellte Verriegelungsvorrichtung ist an einem Bodenbereich eines Fahrzeugsitzes angeordnet und weist ein topfartiges Gehäuse 1 auf, in dem parallel zueinander ein erster Achsbolzen 2 und ein zweiter Achsbolzen 3 sich quer zum Boden 4 des Gehäuses 1 erstreckend fest angeordnet sind.

Auf dem ersten Achsbolzen 2 ist ein Entriegelungsnehmer 5, ein Spannexzenter 6 und ein Fangexzenter 7 um eine erste Achse 2' schwenkbar gelagert.

Auf dem zweiten Achsbolzen 3 ist ein Entriegelungselement 8 sowie eine Klinke 9 um eine zweite Achse 3' schwenkbar gelagert, wobei auf die Klinke 9 eine Hülle 10 aufgeklipst ist.

Über ein erstes Koppelblech 11 liegt eine Adapterplatte 12 sich quer über die Öffnung des Gehäuses erstreckend an dem Gehäuse 1 an.

Der erste Achsbolzen 2 und der zweite Achsbolzen 3 sind mit ihren freien Enden in Lagerbohrungen 13 des ersten Koppelblechs 11 und der Adapterplatte 12 sowie in Lagerbohrungen 14 des Bodens 4 und eines an der Außenseite des Bodens 4 anliegenden zweiten Koppelblechs 15 gelagert.

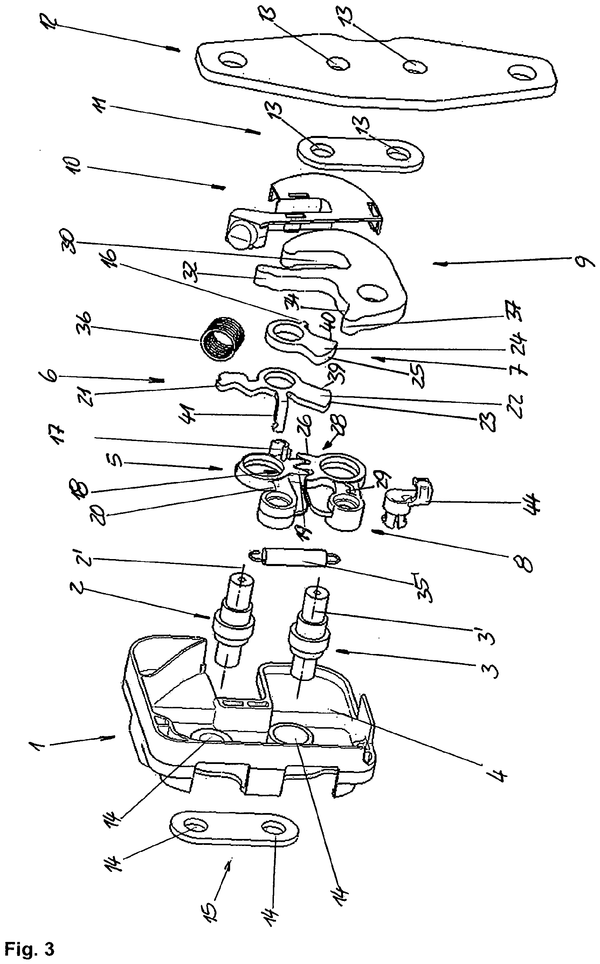

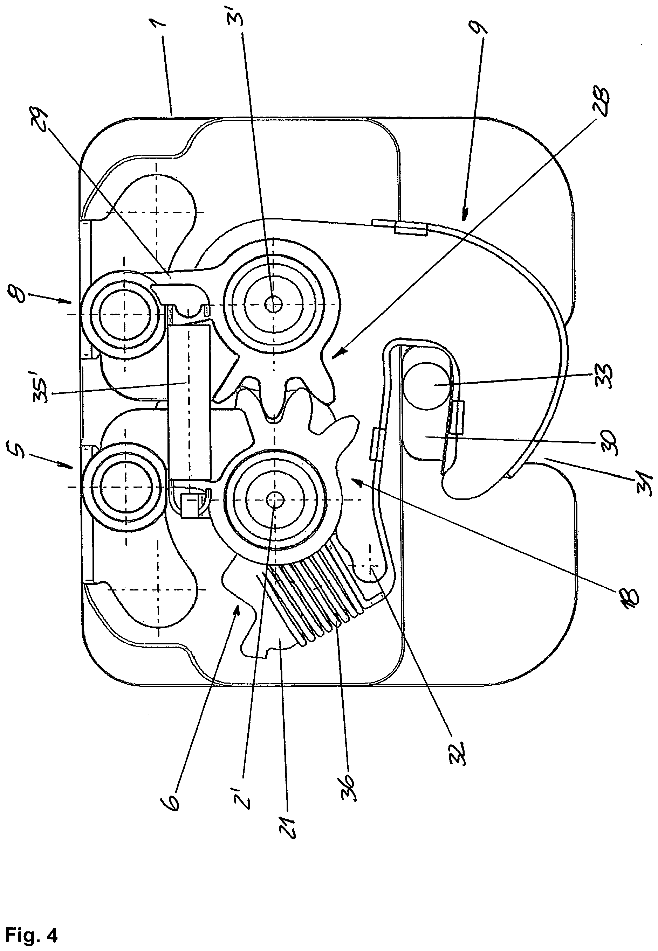

Der Entriegelungsnehmer 5 weist einen zapfenartigen Mitnehmer 16 auf, der sich parallel zum ersten Achsbolzen 2 über den Spannexzenter 6 hinweg in eine Mitnahmegabel 17 des Fangexzenters 7 hineinragend erstreckt. Bei dem Ausführungsbeispiel der Figuren 3 und 4 ist die Anordnung von Mitnehmer 16 und Mitnehmergabel 17 umgekehrt.

Im Wesentlichen diametral dem Mitnehmer 16 gegenüberliegend weist der Entriegelungsnehmer 5 einen zur ersten Achse 2' konzentrischen ersten Zahnsektor 18 mit drei Zähnen 19 auf.

Etwa 90° zum ersten Zahnsektor 18 erstreckt sich radial ein Nehmerbetätigungsarm 20 des Entriegelungsnehmers 5.

Der Spannexzenter 6 besitzt einen sich im Wesentlichen radial erstreckenden Federangriffsarm 21 und diametral dazu einen Spannflächenarm 22, der an seinem freien Ende eine Spannfläche 23 aufweist.

Der Fangexzenter 7 besitzt etwa 90° zur Mitnehmergabel 17 sich radial erstreckend einen Fangflächenarm 24, der an seinem freien Ende eine Fangfläche 25 aufweist.

Das Entriegelungselement 8 und der Entriegelungsnehmer 5 sind einander in einer Ebene gegenüberliegend auf dem ersten Achsbolzen 2 bzw. dem zweiten Achsbolzen 3 angeordnet.

Diametral dem ersten Zahnsektor 18 gegenüberliegend erstreckt sich zur zweiten Achse 3' konzentrisch ein zweiter Zahnsektor 28 des Entriegelungselements 8, das drei Zähne 26 aufweist, die in die Zähne 19 des ersten Zahnsektors 18 eingreifen.

Quer zu dem zweiten Zahnsektor 28 sich radial erstreckend besitzt das Entriegelungselement 8 einen Geberbetätigungsarm 29.

Die Klinke 9 weist ein Hakenmaul 30 auf, welches mit einem z.B. an einem Boden eines Fahrzeugs fest angeordneten Bolzen 33 als Gegenelement zusammenwirkt und im verriegelten Zustand der Verriegelungsvorrichtung eine im Gehäuse 1 ausgebildete Bolzenaufnahme 31 senkrecht kreuzt. Im geöffneten Zustand öffnet sich das Hakenmaul 30 schräg zur Bolzenaufnahme 31 hin.

Nach oben hin wird das Hakenmaul 30 durch einen Finger 32 der Klinke 9 begrenzt, wobei die so definierte Breite des Hakenmauls 30 geringfügig größer ist als der Durchmesser des Bolzens 33.

Die Klinke 9 weist weiterhin eine erste Funktionsfläche 34 auf, welche in der verriegelten Stellung näherungsweise in Richtung des zweiten Achsbolzens 3 weist. Die erste Funktionsfläche 34 ist beispielsweise kreisbogenförmig gekrümmt und konkav ausgebildet.

Der Spannexzenter 6 und der Fangexzenter 7 besitzen jeweils eine geringere Breite als die Klinke 9 und sind beide der Klinke 9 gegenüberliegend angeordnet.

Der Spannexzenter 6 ist durch ein Federelement zur Klinke 9 hin vorgespannt.

Im verriegelten Zustand übt der Spannexzenter 6 über die exzentrisch zum ersten Achsbolzen 2 gekrümmte Spannfläche 23, welche sich in nicht selbsthemmendem Kontakt mit der ersten Funktionsfläche 34 befindet, ein schließendes Moment auf die Klinke 9 aus. Die Spannfläche 23 ist beispielweise kreisbogenförmig gekrümmt und konvex ausgebildet.

Die Fangfläche 25 des Fangexzenters 7 befindet sich in der Nachbarschaft zur Spannfläche 23, jedoch im verriegelten Zustand beabstandet zur ersten Funktionsfläche 34. Die Fangfläche 25 ist beispielsweise kreisbogenförmig gekrümmt und konvex ausgebildet. In einem Crashfall, wenn die Klinke 9 eventuell ein öffnendes Moment erfährt und den Spannexzenter 6 wegdrückt, gelangt die Fangfläche 25 in Anlage an die erste Funktionsfläche 34 zur Abstützung der Klinke 9 und zur Verhinderung des Öffnens derselben.

Durch Bewegen des Nehmerbetätigungsarms 20 oder des über die Zahnsektoren 18 und 28 mit diesem gekoppelten Geberbetätigungsarms 29 durch eine Betätigungseinrichtung vom verriegelten Zustand in den entriegelten Zustand schwenkt der Fangexzenter 7 von der Klinke 9 weg. Dadurch entfernt sich die Fangfläche 25 von der ersten Funktionsfläche 34.

Dabei weist die Betätigungseinrichtung einen nicht dargestellten Bowdenzug auf, der über ein an dem Geberbetätigungsarm 29 befestigbares Verbindungsteil 44 an dem Geberbetätigungsarm 29 angreift.

Über den Mitnehmer 16 nimmt der Fangexzenter 7 nach einem kleinen Leerhub den Spannexzenter 6 mit. Die Klinke 9 ist dann nicht länger gesichert.

Durch eine mit ihrem einen Ende den Spannexzenter 6 in Richtung seiner Verriegelungslage und mit ihrem anderen Ende die Klinke 9 in Entriegelungsrichtung beaufschlagende, vorgespannte Klinkendruckfeder 36 wird dabei die Klinke 9 schlagartig in ihre Entriegelungsstellung bewegt und dadurch der sich im Hakenmaul 30 und der Bolzenaufnahme 31 befindliche Bolzen 33 durch den Finger 32 aus dem Hakenmaul 30 und der Bolzenaufnahme 31 ausgeworfen.

Dabei schiebt sich die Klinke mit einer zweiten Funktionsfläche 37, welche im Wesentlichen quer zur ersten Funktionsfläche 34 ausgebildet ist, am Spannexzenter 6 und am Fangexzenter 7 vorbei.

Wird die Beaufschlagung in Entriegelungsrichtung von Nehmerbetätigungsarm 20 oder Geberbetätigungsarm 29 beendet, so drückt ein vorgespanntes Federelement zwischen Spannexzenter 6 und Entriegelungselement 8 das Entriegelungselement 8 und den mit diesem gekoppelten Entriegelungsnehmer 5 in Verriegelungsrichtung.

Dabei wird der Spannexzenter 6 gegen die zweite Funktionsfläche 37 gedrückt und liegt mit einer Anlagefläche 39 an der zweiten Funktionsfläche 37 an, wobei die Flächennormale der zweiten Funktionsfläche 37 und der Anlagefläche 39 vor dem Zentrum des zweiten Achsbolzens 2 und dem Hakenmaul 30 verläuft. Damit übt der Spannexzenter 6 über die Anlagefläche 39 ein öffnendes Moment auf die Klinke 9 aus, welches diese geöffnet hält.

Der Fangexzenter 7 macht die Bewegung des Spannexzenters 6 mit. Der Fangexzenter 7 weist eine Anlagefläche 40 auf, die normalerweise im verriegelten Zustand einen geringen Abstand zur zweiten Funktionsfläche 37 aufweist und nur in einem Crashfall gegen die zweite Funktionsfläche 37 zur Anlage kommt. Auch die Flächennormale der Anlagefläche 40 verläuft vor dem Zentrum des zweiten Achsbolzens 2 und dem Hakenmaul 30.

Durch die schließende Kraft des Spannexzenters 6, die auf die Klinke 9 wirkt, wird der fahrzeugfeste Bolzen 33 gegen das Gehäuse 1 der Verriegelungsvorrichtung gedrückt.

Gelangt der Bolzen 33 wieder in die Bolzenaufnahme 31 und in Anlage an den Finger 32, drückt der Bolzen 33 die Klinke 9 in Verriegelungsrichtung.

Durch die Anordnung der Klinkendruckfeder 36 zwischen Klinke 9 und Spannexzenter 6 werden nur vergleichsweise niedrige Verriegelungskräfte benötigt, die beim Einschwenken des fahrzeugseitigen Bolzens 33 auf die Klinke 9 wirken.

Dabei schwenkt die zweite Funktionsfläche 37 der Klinke 9 von dem Fangexzenter 7 und dem Spannexzenter 6 weg. Durch das Federelement und die Klinkendruckfeder 36 wird dabei der Spannexzenter 6 in seine Verriegelungsstellung geschwenkt. Dabei beaufschlagt der Spannexzenter 6 auch den Mitnehmer 16, der den Fangexzenter 7 ebenfalls in seine Verriegelungsstellung schwenkt.

Es versteht sich, dass die Verriegelungsvorrichtung an jeder Stelle eines Fahrzeugsitzes angeordnet sein kann und mit einem Gegenelement eines Fahrzeugs zusammenwirken kann.

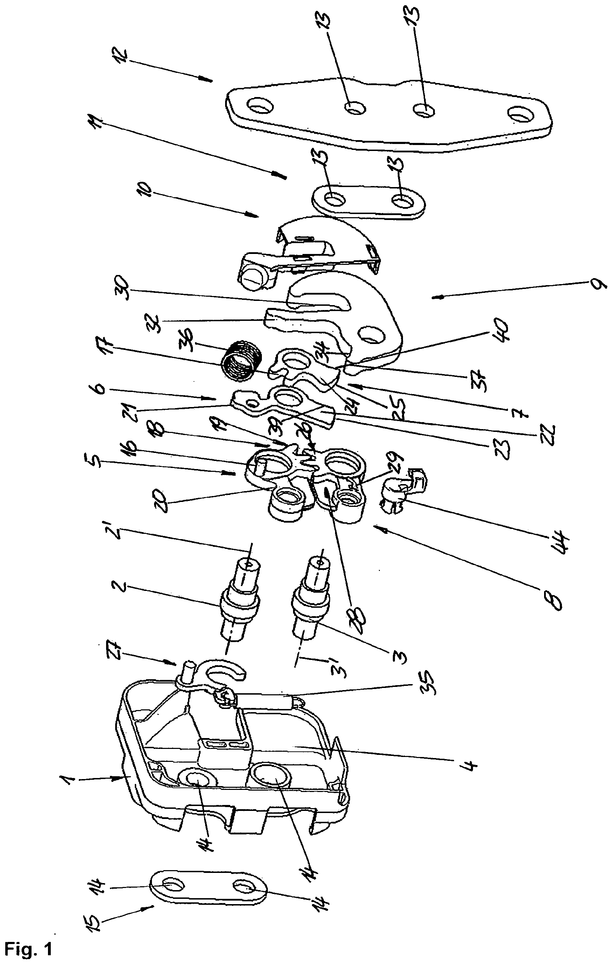

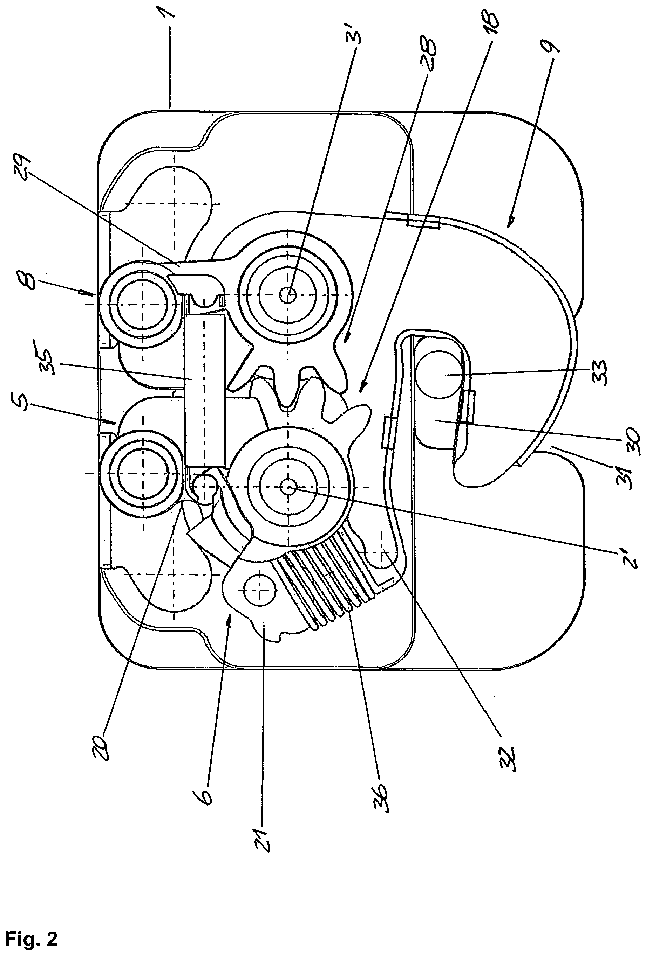

Bei dem ersten Ausführungsbeispiel, das in den Figuren 1 und 2 dargestellt ist, ist an dem Spannexzenter 6 ein Kopplungsteil 27 formschlüssig angeordnet, an dem in einem radialen Abstand zur ersten Achse 2' eine das Federelement bildende vorgespannte Zugfeder 35 mit ihrem einen Ende angreift, die mit ihrem anderen Ende in einem radialen Abstand zur zweiten Achse 3' an dem Entriegelungselement 8 angreift.

Bei dem zweiten Ausführungsbeispiel, das in den Figuren 3 und 4 dargestellt ist, weist der Spannexzenter 6 einen mit diesem einteilig ausgebildeten Koppelarm 41 auf, der sich parallel zur ersten Achse 2' erstreckt und an dessen freien Ende eine das Federelement bildende vorgespannte Zugfeder 35' mit ihrem einen Ende angreift, die mit ihrem anderen Ende in einem radialen Abstand zur zweiten Achse 3' an dem Entriegelungselement 8 angreift.

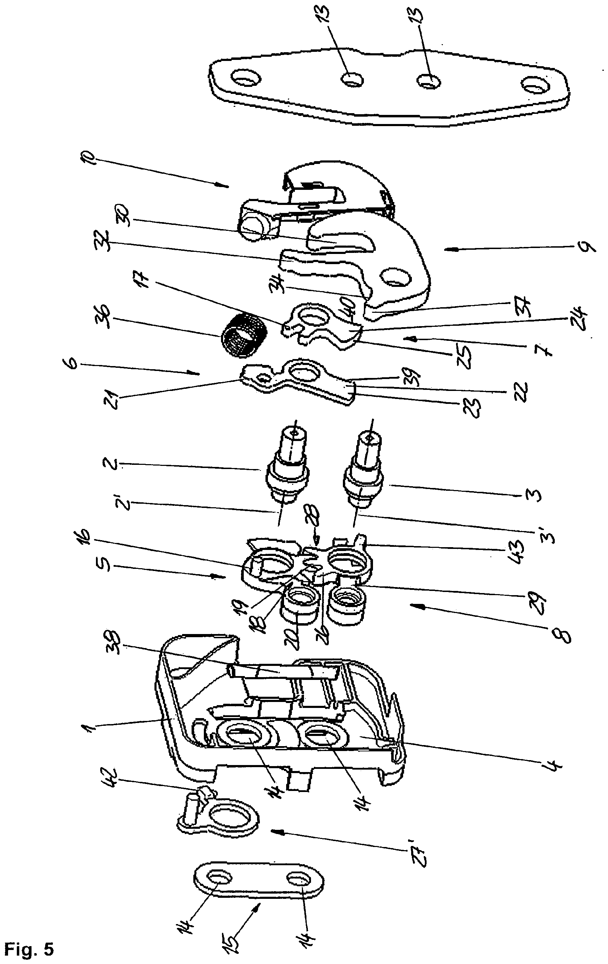

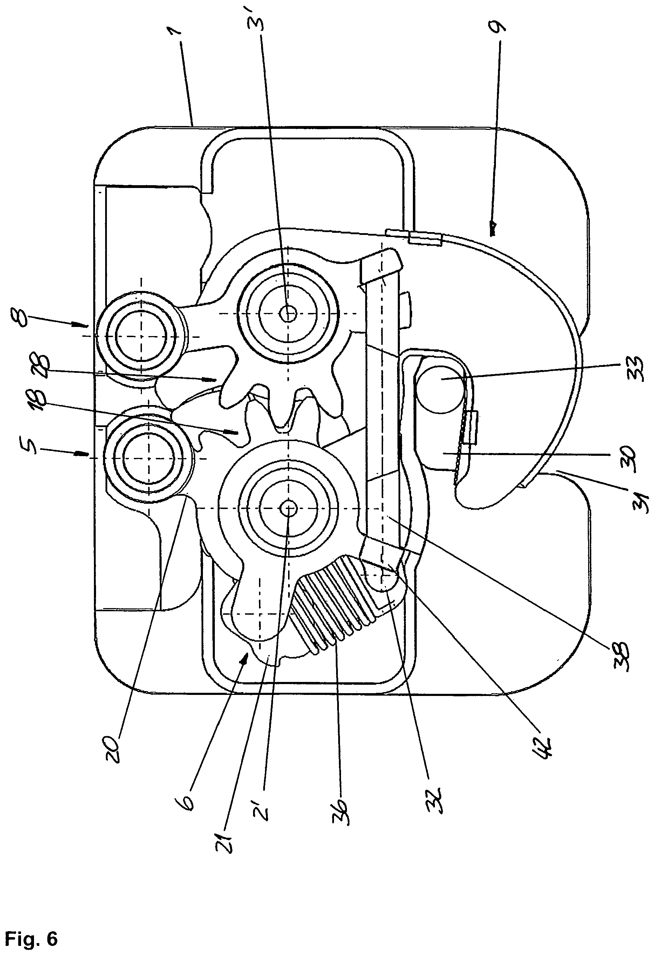

Bei dem dritten Ausführungsbeispiel, das in den Figuren 5 und 6 dargestellt ist, ist an dem Spannexzenter 6 ein Kopplungsteil 27' formschlüssig angeordnet, das einen ersten Federabstützarm 42 aufweist, an dem in einem radialen Abstand zur ersten Achse 2' eine das Federelement bildende vorgespannte Druckfeder 38 abgestützt ist, die mit ihrem anderen Ende in einem radialen Abstand zur zweiten Achse 3' an einem zweiten Federabstützarm 43 des Entriegelungselements 8 abgestützt ist.

### Bezugszeichenliste

- 1: Gehäuse
- 2: erster Achsbolzen
- 2': erste Achse
- 3: zweiter Achsbolzen
- 3': zweite Achse
- 4: Boden
- 5: Entriegelungsnehmer
- 6: Spannexzenter
- 7: Fangexzenter
- 8: Entriegelungselement
- 9: Klinke
- 10: Hülle
- 11: erstes Koppelblech
- 12: Adapterplatte
- 13: Lagerbohrungen
- 14: Lagerbohrungen
- 15: zweites Koppelblech
- 16: Mitnehmer
- 17: Mitnehmergabel
- 18: erster Zahnsektor
- 19: Zähne
- 20: Nehmerbetätigungsarm
- 21: Federangriffsarm
- 22: Spannflächenarm
- 23: Spannfläche
- 24: Fangflächenarm
- 25: Fangfläche
- 26: Zähne
- 27: Kopplungsteil
- 27': Kopplungsteil
- 28: zweiter Zahnsektor
- 29: Geberbetätigungsarm
- 30: Hakenmaul
- 31: Bolzenaufnahme
- 32: Finger
- 33: Bolzen
- 34: erste Funktionsfläche
- 35: Zugfeder
- 35': Zugfeder
- 36: Klinkendruckfeder
- 37: zweite Funktionsfläche
- 38: Druckfeder
- 39: Anlegefläche
- 40: Anlegefläche
- 41: Koppelabstützarm
- 42: erster Federabstützarm
- 43: zweiter Federabstützarm
- 44: Verbindungsteil

## Patentansprüche

1. Verriegelungsvorrichtung für einen Fahrzeugsitz, insbesondere einen Kraftfahrzeugsitz,
mit einer um eine zweite Achse (3') schwenkbar gelagerten Klinke (9) zum Verriegeln eines Gegenelements,
mit einem Spannexzenter (6), der um eine zur zweiten Achse (3') parallele erste Achse (2') zwischen einer Verriegelungslage und einer Entriegelungslage schwenkbar gelagert ist und durch Zusammenwirken mit einer ersten Funktionsfläche (34) der Klinke (9) einen verriegelten Zustand der Klinke (9) sichert, wobei der in die Verriegelungslage federbelastete Spannexzenter (6) im verriegelten Zustand der Klinke (9) über eine Spannfläche (23) auf die erste Funktionsfläche (34) einwirkt,
**dadurch gekennzeichnet, dass**
ein Entriegelungselement (8) durch eine Betätigungseinrichtung entgegen einer Federkraft aus einer Verriegelungsstellung in eine Entriegelungsstellung um die zweite Achse (3') schwenkbar gelagert ist, durch das direkt oder indirekt der Spannexzenter (6) aus seiner Verriegelungslage in Richtung in seine Entriegelungslage schwenkbar mitnehmbar ist,
wobei zwischen dem Entriegelungselement (8) und dem Spannexzenter (6) ein vorgespanntes Federelement angeordnet ist, durch welches das Entriegelungselement (8) in seine Verriegelungsstellung und der Spannexzenter (6) in seine Verriegelungslage federbelastet ist.

2. Verriegelungsvorrichtung nach Anspruch 1, **dadurch gekennzeichnet, dass** das vorgespannte Federelement eine Zugfeder (35, 35') ist, die mit ihrem einen Ende in einem radialen Abstand zur zweiten Achse (3') an dem Entriegelungselement (8) und mit ihrem anderen Ende in einem radialen Abstand zur ersten Achse (2') an dem Spannexzenter (6) angreift.

3. Verriegelungsvorrichtung nach Anspruch 1, **dadurch gekennzeichnet, dass** das vorgespannte Federelement eine Druckfeder (38) ist, die mit ihrem einen Ende in einem radialen Abstand zur zweiten Achse (3') an dem Entriegelungselement (8) und mit ihrem anderen Ende in einem radialen Abstand zur ersten Achse (2') an dem Spannexzenter (6) abgestützt ist.

4. Verriegelungsvorrichtung nach einem der vorhergehenden Ansprüche, **dadurch gekennzeichnet, dass** eine vorgespannte Klinkendruckfeder (36) mit ihrem einen Ende an einem Arm des Spannexzenters (6) diesen in seine Verriegelungslage belastend abgestützt ist und mit ihrem anderen Ende die Klinke (9) in Entriegelungsrichtung beaufschlagt.

5. Verriegelungsvorrichtung nach einem der vorhergehenden Ansprüche, **dadurch gekennzeichnet, dass** ein Fangexzenter (7) um die erste Achse (2') schwenkbar gelagert ist und durch Zusammenwirken mit der ersten Funktionsfläche (34) der Klinke (9) einen verriegelten Zustand der Klinke (9) sichert, wobei die Klinke (9) im verriegelten Zustand durch eine Fangfläche (25) des Fangexzenters (7) abstützbar ist und wobei durch das um die zweite Achse (3') schwenkbare Entriegelungselement (8) direkt oder indirekt der Fangexzenter (7) zwischen seiner Verriegelungsposition und seiner Entriegelungsposition bewegbar ist.

6. Verriegelungsvorrichtung nach einem der vorhergehenden Ansprüche, **dadurch gekennzeichnet, dass** ein Entriegelungsnehmer (5) aus einer Verriegelungsstellung in eine Entriegelungsstellung um die erste Achse (2') schwenkbar gelagert ist und über eine Mitnahmekopplung derart mit dem Entriegelungselement (8) gekoppelt ist, dass durch eine Schwenkbewegung des Entriegelungselements (8) aus der Verriegelungsstellung in die Entriegelungsstellung der Entriegelungsnehmer (5) von seiner Verriegelungsstellung in seine Entriegelungsstellung bewegbar antreibbar ist.

7. Verriegelungsvorrichtung nach einem der vorhergehenden Ansprüche, **dadurch gekennzeichnet, dass** ein Entriegelungsnehmer (5) aus einer Entriegelungsstellung in eine Verriegelungsstellung um die erste Achse (2') schwenkbar gelagert ist und über eine Mitnahmekopplung derart mit dem Entriegelungselement (8) gekoppelt ist, dass durch eine Schwenkbewegung des Entriegelungselements (8) aus der Entriegelungsstellung in die Verriegelungsstellung der Entriegelungsnehmer (5) von seiner Entriegelungsstellung in seine Verriegelungsstellung bewegbar antreibbar ist.

8. Verriegelungsvorrichtung nach einem der Ansprüche 6 bis 7, **dadurch gekennzeichnet, dass** der Entriegelungsnehmer (5) einen ersten Zahnsektor (18) mit Zähnen (19) aufweist, und dass das Entriegelungselement (8) einen zweiten Zahnsektor (28) mit Zähnen (26) aufweist, welche in die Zähne (19) des ersten Zahnsektors (18) eingreifen.

9. Verriegelungsvorrichtung nach Anspruch 5, **dadurch gekennzeichnet, dass** der Spannexzenter (6) zwischen dem Fangexzenter (7) und dem Entriegelungsnehmer (5) schwenkbar auf der ersten Achse (2') gelagert ist und der Entriegelungsnehmer (5) einen parallel zur ersten Achse (2') sich erstreckenden Mitnehmer (16) aufweist, der in eine Mitnahmeausnehmung des Fangexzenters (7) eingreift und durch den der Spannexzenter (6) in Richtung seiner Entriegelungslage schwenkbar mitnehmbar ist.

10. Verriegelungsvorrichtung nach Anspruch 9, **dadurch gekennzeichnet, dass** die Mitnahmeausnehmung eine Mitnahmegabel (17) ist.

11. Fahrzeugsitz, umfassend mindestens eine Verriegelungsvorrichtung nach einem der vorhergehenden Ansprüche.

## Claims

1. A locking device for a vehicle seat, in particular a motor vehicle seat, having a pawl (9) which is mounted such that it can be pivoted about a second axis (3') in order to lock a counterelement, having a clamping eccentric (6) which is mounted such that it can be pivoted between a locked location and an unlocked location about a first axis (2') which is parallel to the second axis (3') and secures a locked state of the pawl (9) by way of interaction with a first functional face (34) of the pawl (9), the clamping eccentric (6) which is spring-loaded into the locked location acting via a clamping face (23) on the first functional face (34) in the locked state of the pawl (9), **characterized in that** an unlocking element (8) is mounted such that it can be pivoted about the second axis (3') by an actuating device counter to a spring force from a locked condition into an unlocked condition, by way of which unlocking element (8) the clamping eccentric (6) can be driven directly or indirectly such that it can be pivoted from its locked location in the direction of its unlocked location, a prestressed spring element being arranged between the unlocking element (8) and the clamping eccentric (6), by way of which spring element the unlocking element (8) is spring-loaded into its locked condition and the clamping eccentric (6) is spring-loaded into its locked condition.

2. The locking device as claimed in claim 1, **characterized in that** the prestressed spring element is a tension spring (35, 35') which acts with its one end at a radial spacing from the second axis (3') on the unlocking element (8) and acts with its other end at a radial spacing from the first axis (2') on the clamping eccentric (6).

3. The locking device as claimed in claim 1, **characterized in that** the prestressed spring element is a compression spring (38) which acts with its one end at a radial spacing from the second axis (3') on the unlocking element (8) and acts with its other end at a radial spacing from the first axis (2') on the clamping eccentric (6).

4. The locking device as claimed in one of the preceding claims, **characterized in that** a prestressed pawl compression spring (36) is supported with its one end on an arm of the clamping eccentric (6) so as to load the latter into its locked location and loads the pawl (9) in the unlocking direction with its other end.

5. The locking device as claimed in one of the preceding claims, **characterized in that** a catching eccentric (7) is mounted such that it can be pivoted about the first axis (2') and secures a locked state of the pawl (9) by way of interaction with the first functional face (34) of the pawl (9), it being possible for the pawl (9) to be supported in the locked state by a catching face (25) of the catching eccentric (7), and it being possible for the catching eccentric (7) to be moved between its locked position and its unlocked position directly or indirectly by way of the unlocking element (8) which can be pivoted about the second axis (3').

6. The locking device as claimed in one of the preceding claims, **characterized in that** an unlocking slave (5) is mounted such that it can be pivoted about the first axis (2') from a locked condition into an unlocked condition and is coupled via a driving coupling to the unlocking element (8) in such a way that the unlocking slave (5) can be driven such that it can be moved from its locked condition into its unlocked condition by way of a pivoting movement of the unlocking element (8) from the locked condition into the unlocked condition.

7. The locking device as claimed in one of the preceding claims, **characterized in that** an unlocking slave (5) is mounted such that it can be pivoted about the first axis (2') from a locked condition into an unlocked condition and is coupled via a driving coupling to the unlocking element (8) in such a way that the unlocking slave (5) can be driven such that it can be moved from its unlocked condition into its locked condition by way of a pivoting movement of the unlocking element (8) from the unlocked condition into the locked condition.

8. The locking device as claimed in either of claims 6 and 7, **characterized in that** the unlocking slave (5) has a first tooth sector (18) with teeth (19), and **in that** the unlocking element (8) has a second tooth sector (28) with teeth (26) which engage into the teeth (19) of the first tooth sector (18).

9. The locking device as claimed in claim 5, **characterized in that** the clamping eccentric (6) is mounted such that it can be pivoted on the second axis (2') between the catching eccentric (7) and the unlocking slave (5), and the unlocking slave (5) has a driver (16) which extends parallel to the first axis (2'), engages into a driving recess of the catching eccentric (7), and by way of which the clamping eccentric (6) can be driven pivotably in the direction of its unlocked position.

10. The locking device as claimed in claim 9, **characterized in that** the driving recess is a driving fork (17).

11. A vehicle seat, comprising at least one locking device as claimed in one of the preceding claims.

## Revendications

1. Dispositif de verrouillage pour un siège de véhicule, notamment un siège de véhicule automobile ; avec un cliquet (9) disposé de façon à pouvoir pivoter autour d'un deuxième axe (3') pour le verrouillage d'un contre-élément ;
avec un excentrique de serrage (6) disposé de façon à pouvoir pivoter autour d'un premier axe (2') parallèle au deuxième axe (3') entre une position de verrouillage et une position de déverrouillage et sécurisant un état verrouillé du cliquet (9) par interaction avec une première surface fonctionnelle (34) du cliquet (9), l'excentrique de serrage (6) chargé par ressort dans la position de verrouillage agissant dans l'état verrouillé du cliquet (9) sur la première surface fonctionnelle (34) via une surface de serrage (23) ;
**caractérisé en ce que** :
un élément de déverrouillage (8) est disposé de façon à pouvoir basculer autour du deuxième axe (3') au travers d'un dispositif d'actionnement, à l'encontre d'une force de ressort, d'une position de verrouillage dans une position de déverrouillage, l'excentrique de serrage (6) pouvant être engrené de façon à pouvoir pivoter de sa position de verrouillage en direction de sa position de déverrouillage grâce audit élément de déverrouillage ;
un élément de ressort précontraint étant disposé entre l'élément de déverrouillage (8) et l'excentrique de serrage (6) à travers lequel l'élément de déverrouillage (8) est chargé par ressort dans sa position de verrouillage et l'excentrique de serrage (6) étant sollicité par ressort dans sa position de verrouillage.

2. Dispositif de verrouillage selon la revendication 1, **caractérisé en ce que** l'élément de ressort précontraint est un ressort de traction (35, 35') s'engrenant avec sa première extrémité à une certaine distance radiale par rapport au deuxième axe (3') au niveau de l'élément de déverrouillage (8) et avec son autre extrémité à une certaine distance radial par rapport au premier axe (2') au niveau de l'excentrique de serrage (6).

3. Dispositif de verrouillage selon la revendication 1, **caractérisé en ce que** l'élément de ressort précontraint est un ressort de pression (38) maintenu avec sa première extrémité à une certaine distance radiale du deuxième axe (3') contre l'élément de déverrouillage (8) et avec son autre extrémité à une certaine distance radiale du premier axe (2') contre l'excentrique de serrage (6).

4. Dispositif de verrouillage selon l'une quelconque des revendications précédentes, **caractérisé en ce qu'**un ressort de pression à cliquet (36) précontraint est maintenu avec sa première extrémité contre un bras de l'excentrique de serrage (6) le chargeant dans sa position de verrouillage et charge avec son autre extrémité le cliquet (9) dans la direction de déverrouillage.

5. Dispositif de verrouillage selon l'une quelconque des revendications précédentes, **caractérisé en ce qu'**un excentrique à crochet (7) est disposé de façon à pouvoir pivoter autour du premier axe (2') et sécurise par interaction avec la première surface fonctionnelle (34) du cliquet (9) un état verrouillé du cliquet (9), le cliquet (9) pouvant être maintenu dans l'état verrouillé par une surface d'accroche (25) de l'excentrique à crochet (7) et l'excentrique à crochet (7) pouvant être déplacé entre sa position de verrouillage et sa position de déverrouillage, directement ou indirectement par le biais de l'élément de déverrouillage (8) pouvant pivoter autour du deuxième axe (3').

6. Dispositif de verrouillage selon l'une quelconque des revendications précédentes, **caractérisé en ce qu'**un doigt de déverrouillage (5) est disposé de façon à pouvoir pivoter autour du premier axe (2') d'une position de verrouillage dans une position de déverrouillage et est couplé de telle sorte, via un couplage de mise en prise, avec l'élément de déverrouillage (8) qu'il peut être entraîné de façon à pouvoir être déplacé de sa position de verrouillage dans sa position de déverrouillage par le biais d'un mouvement de pivotement de l'élément de déverrouillage (8) de la position de verrouillage dans la position de déverrouillage du doigt de déverrouillage (5).

7. Dispositif de verrouillage selon l'une quelconque des revendications précédentes, **caractérisé en ce qu'**un doigt de déverrouillage (5) est disposé de façon à pouvoir pivoter autour du premier axe (2') d'une position de déverrouillage dans une position de verrouillage et est couplé de telle sorte, via un couplage de mise en prise, à l'élément de déverrouillage (8) qu'il est entraîné de façon à pouvoir être déplacé de sa position de déverrouillage dans sa position de verrouillage par le biais d'un mouvement de pivotement de l'élément de déverrouillage (8) de la position de déverrouillage dans la position de verrouillage du doigt de déverrouillage (5).

8. Dispositif de verrouillage selon l'une quelconque des revendications 6 à 7, **caractérisé en ce que** le doigt de déverrouillage (5) comporte un premier secteur de dent (18) avec les dents (19) et que l'élément de déverrouillage (8) comporte un deuxième secteur de dent (28) avec les dents (26) s'imbriquant dans les dents (19) du premier secteur de dent (18).

9. Dispositif de verrouillage selon la revendication 5, **caractérisé en ce que** l'excentrique de serrage (6) est disposé entre l'excentrique à crochet (7) et le doigt de déverrouillage (5) de façon à pouvoir pivoter sur le premier axe (2') et que le doigt de déverrouillage (5) comporte un doigt (16) s'étendant parallèlement au premier axe (2') s'imbriquant dans un évidement de mise en prise de l'excentrique à crochet (7) et à travers lequel l'excentrique de serrage (6) peut être mis en prise de façon à pouvoir pivoter en direction de sa position de déverrouillage.

10. Dispositif de verrouillage selon la revendication 9, **caractérisé en ce que** l'évidement de mise en prise est une fourche de mise en prise (17).

11. Siège de véhicule, comprenant au moins un dispositif de verrouillage selon l'une quelconque des revendications précédentes.
